# EUROPÄISCHE PATENTANMELDUNG

(11) **EP 2 145 818 A1**
(43) Veröffentlichungstag der Anmeldung: **20.01.2010**
(21) Anmeldenummer: 09012131.0
(22) Anmeldetag: 03.04.2008
(51) Int. Cl.: B62M 1/12

(54) **Fahrrad mit Arm- und Beinantrieb**

(30) Priorität: 03.04.2007 DE 102007016381; 28.04.2007 EP 07008716; 09.05.2007 EP 07009294; 14.06.2007 EP 07011680
(62) Teilanmeldung aus: 08006805.9
(71) Anmelder: Kraiß, Martin, 89081 Ulm (DE)
(72) Erfinder: Kraiß, Martin, 89081 Ulm (DE)

(57) **Zusammenfassung**

Bei der Erfindung handelt es sich um ein zweirädriges Fahrrad mit Armantrieb.

Bekannte Fahrräder mit Armantrieb werden über die Arme gelenkt und angetrieben. Der Nachteil dieser Ausführung ist, dass der Antrieb über die Arme die Lenkbewegung stört.

Die Erfindung löst das geschilderte Problem, indem der Fahrradfahrer das Fahrrad durch Neigen lenkt. Dabei neigt der Fahrradfahrer das Fahrrad gegen seine Aufstandsfläche und schwenkt dadurch einen Achsschenkel um wenigstens eine Lenkachse, die sich hinter der Achse des Vorderrades befindet. Die Erfindung ermöglicht es somit dem Fahrradfahrer das Fahrrad über den Armantrieb mit ganzer Kraft anzutreiben und dabei gleichzeitig das Fahrrad zu lenken.

## Beschreibung

Bei der Erfindung handelt es sich um ein Fahrrad mit zwei Rädern das über Armantrieb, oder über Arm- und Beinantrieb, verfügt.

Ein Fahrrad ist ein Fahrzeug, das vom Fahrradfahrer mit Muskelkraft angetrieben wird.

Bekannte Fahrräder mit Arm- und Beinantrieb werden über die Hände gelenkt und angetrieben. Das US-Patent 5,775,708 offenbart ein soches Fahrrad. Der Nachteil dieser bekannten Fahrräder ist, dass die Hände des Fahrradfahrers gleichzeitig das Fahrrad antreiben und lenken müssen. Durch die Antriebskraft die die Arme über die Hände auf die Armhebel ausüben, lässt es sich nicht vermeiden das die Lenkbewegung gestört wird. Grund dafür ist die Bewegung, die den Armhebel bewegt. Dadurch dass der lenkende Handgriff nicht fest mit dem Armhebel verbunden ist, führt zur Tendenz, dass sich der Handgriff bei jeder antreibenden Armbewegung mitbewegt. Somit bewirkt das Antreiben durch die Arme eine mehr oder minder starke Lenkbewegung. Diese Tendenz zur Lenkbewegung während des Antriebes durch die Arme bewirkt, dass der Fahrradfahrer bei Geradeausfahrt und während seines Antreiben des Fahrrades über seine Arme, versuchen muss dabei gleichzeitig den Handgriff nicht zu schwenken. Dies ist nahezu unmöglich. Selbst wenn es dem Fahrradfahrer gelingt den Handgriff nahezu unbewegt zu halten, so erfordert dies doch höchste Konzentration und große Anstrengung. Somit wird der Fahrradfahrer mit seinen Händen nicht die volle mögliche Antriebskraft auf die Armhebel ausüben, da dadurch sofort der lenkende Handgriff bewegt würde. Der Nachteil ist also, dass die Hände die Antriebskraft der Arme übertragen müssen und dabei gleichzeitig das Fahrrad lenken müssen.

Außerdem ist die Lenkkraft, die durch eine Schwenkbewegung des lenkenden Handgriffes erzeugt wird, zu gering. Grund dafür ist der geringe Hebelarm des Handgriffes und die geringe Kraft die die Hand für diese Schwenkbewegung des Handgriffes aufbringen kann. Ein sicheres Lenken erfordert eine bedeutend höhere Lenkkraft. Insbesondere, da ein großer Teil der Lenkkraft bereits durch Reibung der Bowdenzüge verloren geht. Diese Bowdenzüge übertragen die Lenkkraft von den Handgriffen auf die lenkende Fahrradgabel

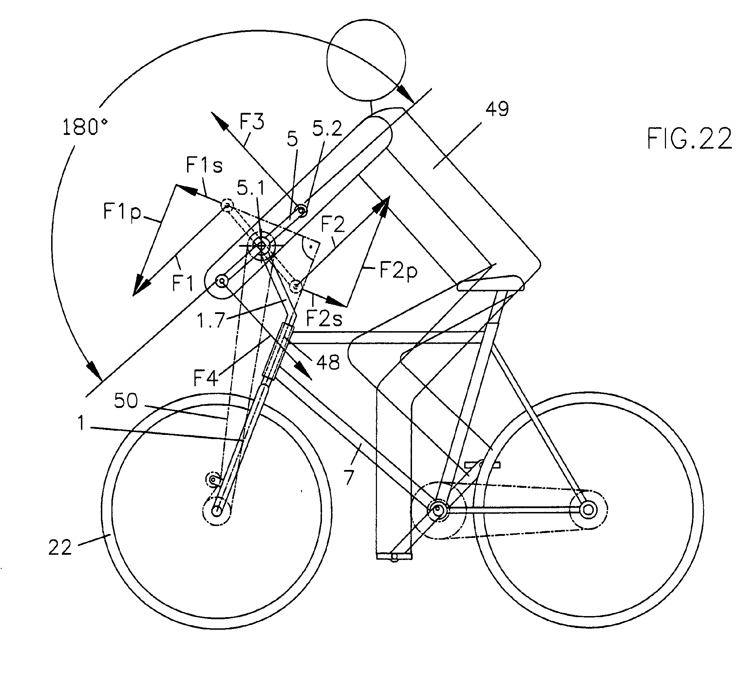

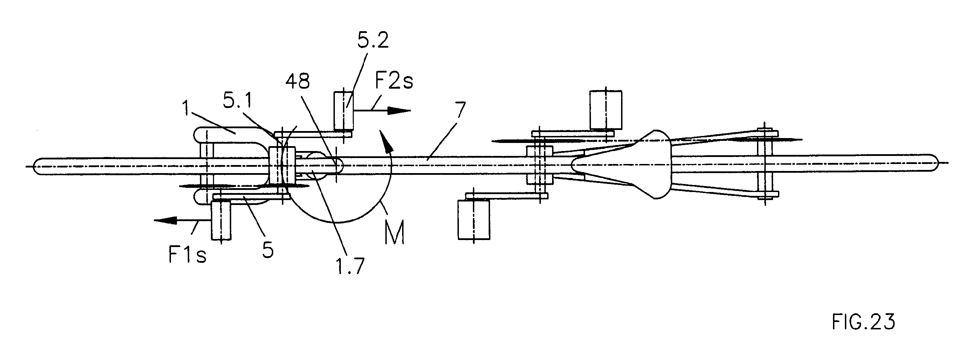

Die deutsche Patentanmeldung DE 198 29 750 A1 offenbart auch ein Fahrrad mit Arm- und Beinantrieb. In dieser Anmeldung wird das Fahrrad über die Arme gelenkt und angetrieben. Der Armkurbelantrieb wird von den Armen angetrieben und besteht aus zwei Handkurbeln 5 mit Handkurbelgriffen 5.2 und einer Achse 5.1. Die Achse 5.1 der Handkurbeln 5 ist hierbei meist im Vorbau 1.7 der Gabel 1 gelagert (FIG.22). Die Gabel 1 des Vorderrades 22 ist über das Lenkkopflager im Fahrradrahmen 7 drehbar, um die Lenkkopflagerachse 48, gelagert. Somit lenkt der Fahrradfahrer 49 das Fahrrad über die Handkurbeln 5. Über eine Antriebskette 50 treiben die Handkurbeln 5 das Vorderrad 22 an. Die rechte und die linke Handkurbel 5 sind in einem 180° Winkel zueinander angeordnet. In dieser Winkelanordnung ist die Kurbelbewegung der Arme am effektivsten und gleichmäßigsten. Während ein Arm an der einen Kurbel 5 zieht, drückt der andere Arm an der anderen Kurbel 5. Der Nachteil dieser Ausführung ist, dass der Antrieb über die Arme die Lenkbewegung stört. Dieser Nachteil wird in der Anmeldung Deutsches Patent DE 196 32 519 A1auf Seite 5, Zeile 18-24 beschrieben. Wenn der Fahrradfahrer 49 das Fahrrad mit seinen Armen über die Handkurbel 5 antreibt, dann wirkt an einem Handkurbelgriff 5.2 eine Kraft F3 und am zweiten Handkurbelgriff 5.2 eine Kraft F4 (FIG.22). Haben die Arme die Handkurbeln 5 um 90° weiter gedreht (gestrichelt dargestellt), dann wirken eine Kraft F1 und F2. Alle Kräfte F1, F2, F3, F4 kann man in jeweils eine Kraftkomponente senkrecht zur Lenkkopflagerachse 48 und eine Kraftkomponente parallel zur Lenkkopflagerachse 48 zerlegen. Für die Kraft F1 wirkt die Kraftkomponente F1s senkrecht und die Kraftkomponente F1p parallel zur Lenkkopflagerachse 48. Für die Kraft F2 wirkt die Kraftkomponente F2s senkrecht und die Kraftkomponente F2p parallel zur Lenkkopflagerachse 48. Die Kraftkomponenten die senkrecht zur Lenkkopflagerachse 48 wirken erzeugen ein Moment M um die Lenkkopflagerachse 48. Die Lenkkopflagerachse 48 ist die Lenkachse der Gabel 1. Die Draufsicht des Fahrrades in FIG.23 zeigt die Kraftkomponenten F1s und F2s die das Moment M erzeugen. Für eine Geradeausfahrt des Fahrrades muss dieses Moment M aufgehoben werden. Dieses Moment M kann nur durch ein entsprechendes Gegenlenken des Fahrradfahrers 49 aufgehoben werden. Dieses ständige Gegenlenken erfordert vom Fahrradfahrer 49 zusätzliche Kraft und Konzentration. Aus diesem Grund haben sich diese Fahrräder nicht durchgesetzt. Andere bekannte Fahrräder vermeiden, dass während des Kurbelns mit den Armen ein Moment M entsteht, indem bei ihnen die beiden Kurbeln 5 in einem Winkel 0° zueinander angeordnet sind. Diese Anordnung ist aber weniger effektiv, da beide Arme, abhängig von der jeweiligen Kurbelstellung, gleichzeitig an beiden Handkurbelgriffen 5.2 ziehen oder drücken. Außerdem ist der Bewegungsablauf beim Kurbeln nicht so gleichmäßig, wie bei einer Kurbelanordnung von 180°, da sich der Oberkörper, der Kurbelbewegung folgend, ständig vor und zurück bewegt. Die Aufgabe der Erfindung ist es, dass der Fahrradfahrer seine Antriebskraft optimal auf das Fahrrad übertragen kann. Weiterhin ist es die Aufgabe der Erfindung die Lenkung des Fahrrades vor dem Einfluss von Antriebskräften zu bewahren. Der Fahrradfahrer soll das Fahrrad mit seiner ganzen Kraft antreiben können und dabei das Fahrrad sicher und präzise lenken können.

Die Erfindung löst das geschilderte Aufgabe, indem es die Antriebsbewegung von der Lenkbewegung trennt.
In der Erfindung lenkt der Fahrradfahrer das Fahrrad durch Neigen des Fahrradrahmens quer zur Fahrtrichtung.
Außerdem sind beide, der Arm- und der Beinantrieb, im Fahrradrahmen gelagert. Somit werden sämtliche Antriebskräfte von diesen Lagerungen im Fahrradrahmen aufgenommen und in ein Antriebsmoment umgewandelt. Das Antriebsmoment wird auf das Hinterrad übertragen. Es werden keine Antriebskräfte auf die Lenkung übertragen. Dadurch kann der Fahrradfahrer das Fahrrad mit seiner vollen Arm- und Beinkraft antreiben, ohne dass er dabei ungewollte Lenkkräfte erzeugt.

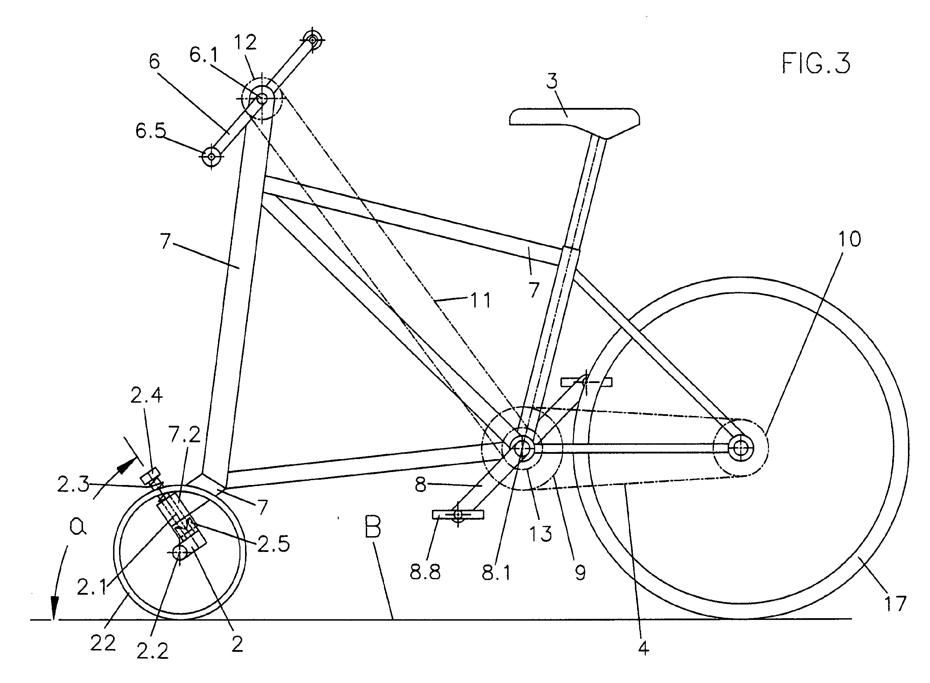

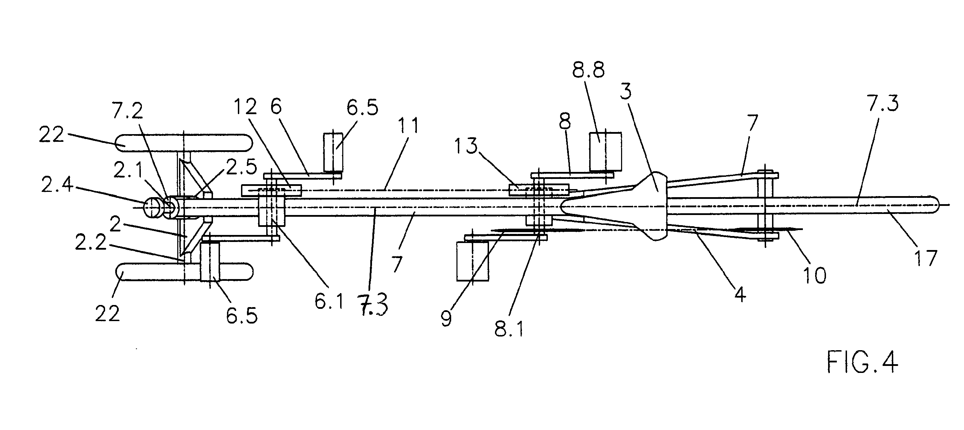

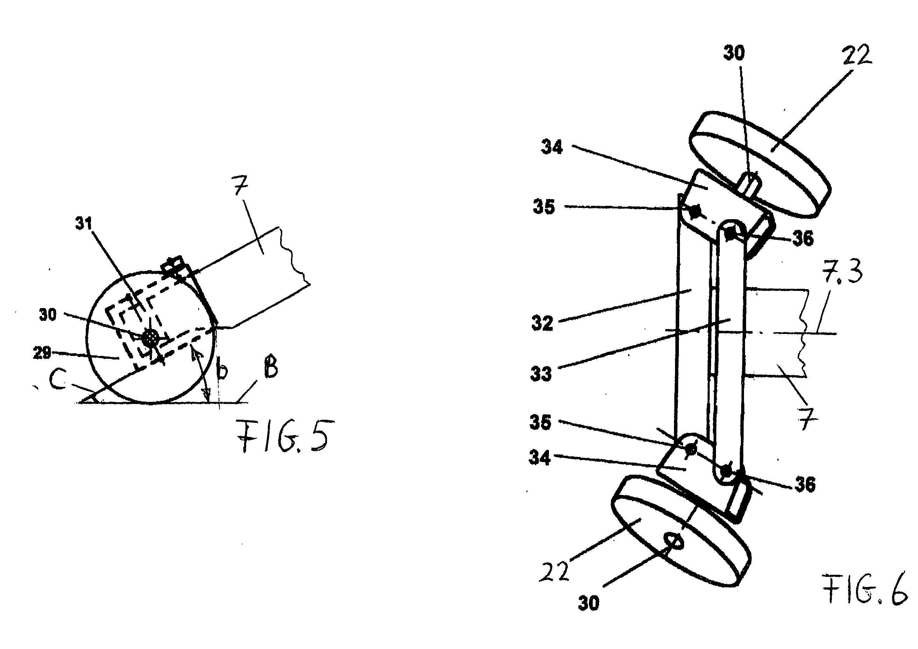

In der erfindungsgemäßen Variante A1 treibt der Fahrradfahrer mit seinen Armen die Handkurbeln 6 und mit seinen Beinen die Tretkurbeln 8 des Fahrrades an. Die Handkurbeln 6 sind dabei, über die Achse 6.1, im Fahrradrahmen 7 drehbar gelagert (FIG.3). FIG.4 zeigt die Draufsicht der FIG.3. Durch die Lagerung der Handkurbeln 6 im Fahrradrahmen 7 werden die Kräfte, die beim Antrieb auf die Handkurbeln 6 wirken, vom Fahrradrahmen 7 aufgenommen und über einen Synchronriemen 11 und eine Antriebskette 4 auf das Hinterrad übertragen. Der Vorteil dabei ist, dass die Lenkung damit vom Antrieb entkoppelt ist. Die Antriebskraft der Arme wird einfach über den Synchronriemen 11 übertragen. Dieser Synchronriemen 11 verbindet die Handkurbeln 6, über Synchronscheiben 12,13, mit den Tretkurbeln 8 und verläuft parallel zur Antriebskette 4 des Hinterrades 17 (FIG.3,4). Somit ist keine aufwendige Umlenkmechanik notwendig, welche erst den Armantrieb auf das Hinterrad 17 ermöglicht, wenn sich die Handkurbeln 6 auf der sich schwenkenden Gabel befinden (vgl. PCT Patent WO 00/63066).

Weiterhin ist auch keine zweite Gangschaltung notwendig, über die die Antriebskräfte der Handkurbeln 6 auf das Vorderrad 22 übertragen werden. Für den erfindungsgemäßen Arm- und den Beinantrieb der Variante A1 kann eine gemeinsame Schaltung verwendet werden, was Gewicht und Kosten spart. Auf den Handkurbeln 6 sind die Handkurbelgriffe 6.5 drehbar gelagert. Die Tretkurbeln 8 sind mit der Achse 8.1 verschraubt. Diese Achse 8.1 ist über das Tretlager drehbar im Fahrradrahmen 7 gelagert.

Zum Antrieb des Fahrrades bewegt der Fahrer mit seinen Händen die Handkurbeln 6 und mit seinen Füßen die Tretkurbeln 8. Auf den Tretkurbeln 8 sind die Pedale 8.8 drehbar gelagert. An den Kurbeln 6,8 sind Synchronscheiben 12,13 befestigt. Diese sind über den Synchronriemen 11 miteinander verbunden. Somit ist ein synchroner Lauf der Kurbeln 6,8 gewährleistet. Der Synchronriemen 11 verläuft, aus Fahrersicht, rechts vom Fahrradrahmen 7. Auf der linken Seite des Fahrradrahmens 7 verläuft die Antriebskette 4. Sie treibt über das Antriebskettenrad 9, welches fest mit der Tretkurbel 8 verbunden ist, und über das Antriebsritzel 10 das Hinterrad 17 an.
Alternativ befindet sich die Antriebskette 4, das Antriebskettenrad 9 und das Antriebsritzel 10 auf der rechten Seite und die Synchronscheiben 12,13 und der Synchronriemen 11 auf der linken Seite.
Für alle erfindungsgemäßen Varianten gilt, dass ein Achsschenkel ein beweglicher Arm ist, auf dem ein lenkendes Rad drehbar gelagert ist.Die Seitenangaben "links" und rechts" bedeuten in allen geschilderten Varianten, die Seiten aus der Sicht des Fahrradfahrers der in Fahrtrichtung auf dem Fahrrad sitzt.

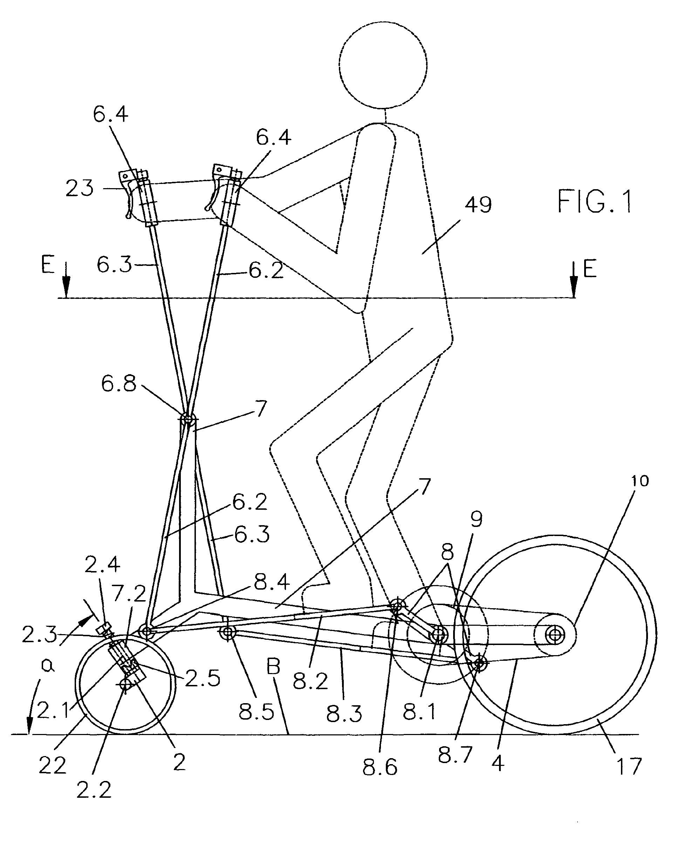

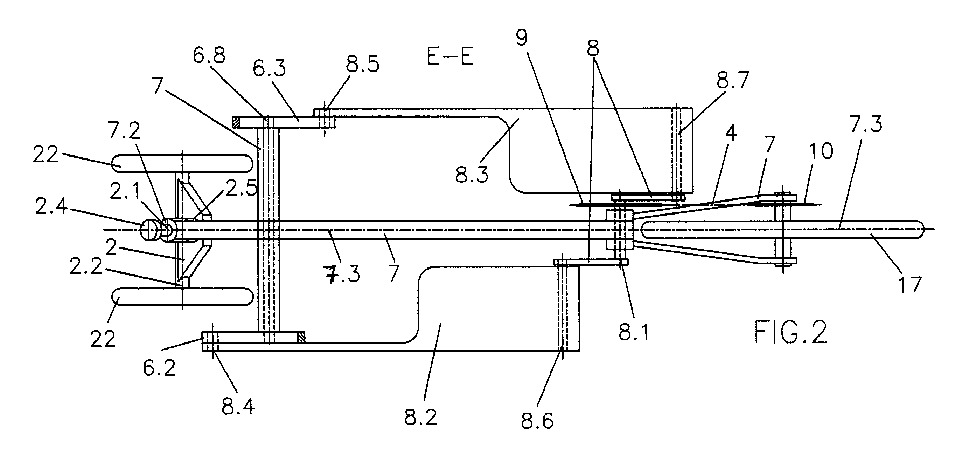

In der erfindungsgemäßen Variante A2 treibt der Fahrradfahrer 49 das Fahrrad über seine Arme und seine Beine an (FIG.1). FIG.2 zeigt den Schnitt E-E der FIG.1. Beim Antrieb entspricht der Bewegungsablauf des Fahrradfahrers dem Bewegungsablauf auf Crosstrainern in Fittnesstudios. Zum Antrieb hält der Fahrradfahrer mit seinen Händen die Handgriffe 6.4 fest. Durch Armbewegungen bewegt der Fahrradfahrer 49 die Armhebel 6.2 und 6.3 vor und zurück. Die Armhebel 6.2 und 6.3 sind über die Achse 6.8 schwenkbar im Fahrradrahmen 7 gelagert. Mit seinen Beinen tritt der Fahrradfahrer 49 auf die Trittbretter 8.2 und 8.3. Das eine Ende des Trittbrettes 8.2 ist über die Achse 8.6 schwenkbar zur Tretkurbel 8 gelagert. Das andere Ende des Trittbrettes 8.2 ist über die Achse 8.4 schwenkbar zum Armhebel 6.2 gelagert. Das eine Ende des Trittbrettes 8.3 ist über die Achse 8.7 schwenkbar zur Tretkurbel 8 gelagert. Das andere Ende des Trittbrettes 8.3 ist über die Achse 8.5 schwenkbar zum Armhebel 6.3 gelagert. Die Tretkurbeln 8 sind mit der Achse 8.1 verschraubt. Diese Achse 8.1 ist über das Tretlager drehbar im Fahrradrahmen 7 gelagert. Auf der rechten Seite des Fahrradrahmens 7 verläuft die Antriebskette 4. Sie treibt über das Antriebskettenrad 9, welches fest mit der rechten Tretkurbel 8 verbunden ist, und über das Antriebsritzel 10 das Hinterrad 17 an. Wie in Variante A1 werden, durch die Lagerung des Arm- und Beinantriebes im Fahrradrahmen 7, die Kräfte, die beim Antrieb des Fahrrades wirken, vom Fahrradrahmen 7 aufgenommen und über die Antriebskette 4 auf das Hinterrad 17 übertragen.
Die Lenkung der Variante A2 entspricht der Lenkung der Variante A1. Der Vorteil der Variante A2 ist, dass die Lenkung damit vom Antrieb entkoppelt ist.

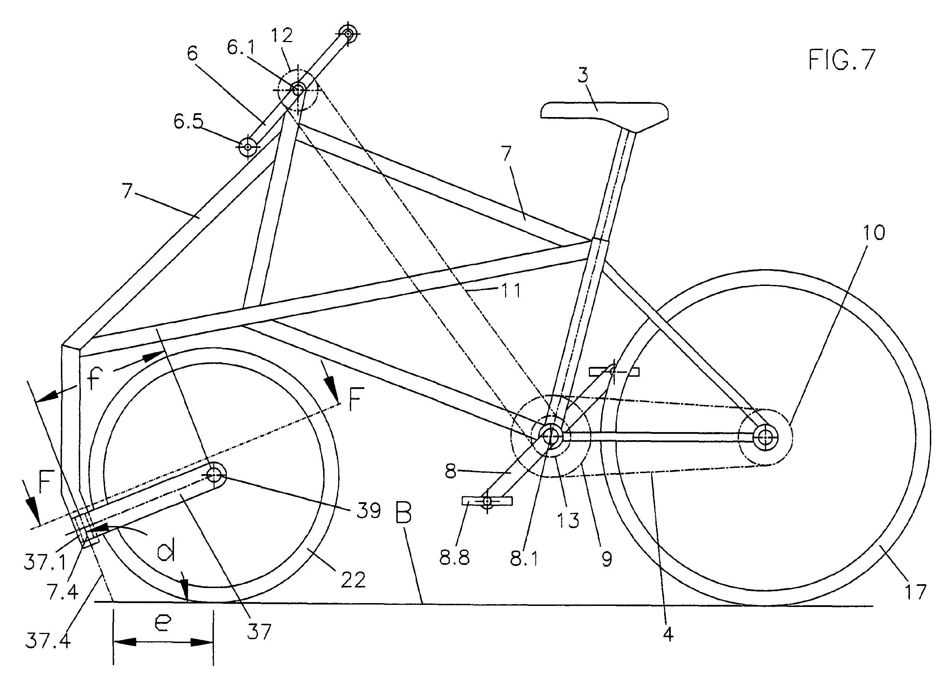

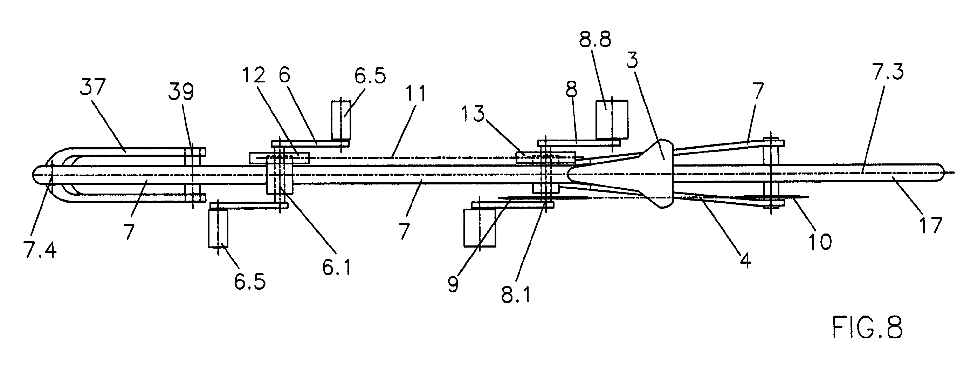

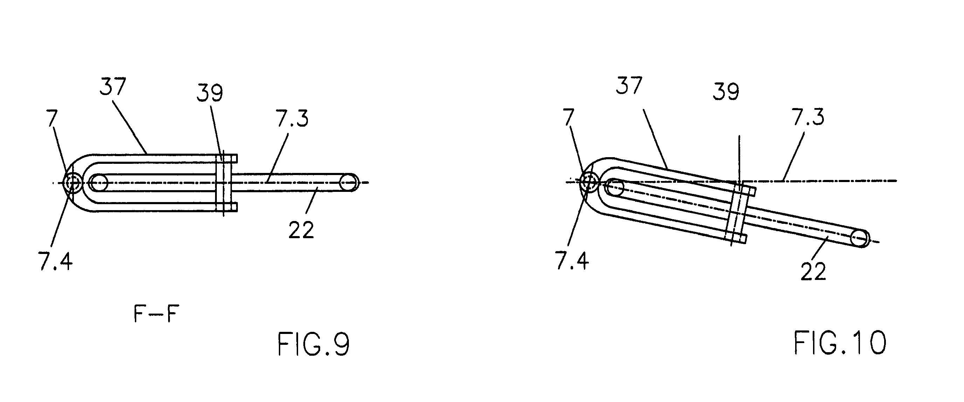

Die erfindungsgemäße Variante A4 entspricht den Varianten A1 und A3. Allerdings besitzt das Fahrrad nur ein Vorderrad 22. Außerdem funktioniert in Variante A4 die Lenkung des Fahrrades anders. In Variante A4 wird nicht wie in der Variante A1 gelenkt und nicht wie in Variante A3 über eine indirekt betätigte Parallelogrammlenkung. In der Variante A4 läuft das Vorderrad 22, bei Geradeausfahrt, entlang der Fahrradmittelachse 7.3 (FIG.9). Das Vorderrad 22 ist über die Achse 39 drehbar im Achsschenkel 37 gelagert (FIG.7,9,10). FIG.8 zeigt die Draufsicht der FIG.7. In Variante A4 besteht die Lagerung des Achsschenkels 37 aus dem das Lenkkopflagerrohr 37.1, dem Lenkkopflager und der Achse 7.4. Das Lenkkopflagerrohr 37.1 ist fest mit dem Achsschenkel 37 verbunden. Die Achse 7.4 ist fest mit dem Fahrradrahmen 7 verbunden. Zwischen dem Lenkkopflagerrohr 37.1 und der Achse 7.4 befindet sich das Lenkkopflager. Das Lenkkopflagerrohr 37.1, und somit der Achsschenkel 37, ist über das Lenkkopflager schwenkbar auf der Achse 7.4, und somit auf dem Fahrradrahmen 7, gelagert. Diese Lagerung des Achsschenkels 37 befindet sich, um das Maß m, vertikal unterhalb der Achse 39 des Vorderrades 22. In Variante A4 ist die Lenkachse 37.4 die gemeinsame Achse des Lenkkopflagers, des Lenkkopflagerrohres 37.1 und der Achse 7.4. Die Lenkachse 37.4 befindet sich vor der Achse 39 des Vorderrades 22 und steht in einem Winkel d zur Aufstandsfläche B (FIG.7). Je kleiner der Winkel d ist, desto weniger Neigung des Fahrradrahmens 7 ist für den gleichen Lenkeinschlag erforderlich. Der Winkel d beträgt zwischen 95° und 140°, vorzugsweise zwischen 105° und 125°. Der Abstand e ist der Nachlauf des Vorderrades 22. Der Abstand e ist größer null. Er ist der Abstand vom sogenannten Spurpunkt zum Aufstandspunkt des Vorderrades 22 auf der Aufstandsfläche B. Der Spurpunkt ist der Schnittpunkt der Lenkachse 37.4 mit der Aufstandsfläche B. Durch diesen Nachlauf e lenkt das Vorderrad 22, bei einem Kippen des Fahrrades nach links, ebenso nach links. Das Vorderrad 22 läuft dem Spurpunkt nach, deshalb der Name "Nachlauf". Außerdem bewirkt die Neigung d der Lenkachse 37.4, in Verbindung mit dem sogenannten Rücksprung f der Achse 39 des Vorderrades 22 zur Lenkachse 37.4, dass bei Geradeausfahrt des Fahrrades die Gewichtskraft des Fahrrades und des Fahrradfahrers das Vorderrad 22 in Geradeausstellung halten und das Fahrrad so spurstabil machen. In Variante A4 ist der Vorderraddurchmesser kleiner als 600 mm. Er darf in der Variante A4 nicht größer sein, da in der Variante A4, bei einem Vorderraddurchmesser von 600 mm, der Rücksprung f mindestens 300 mm beträgt. Vorteilhafterweise sollte der Rücksprung f aber nicht noch größer als der der Variante A4 sein, da bei einem noch größeren Rücksprung f die für die Lenkmanöver benötigte Neigungskraft zu groß wäre.
FIG.10 zeigt die gleiche Schnittansicht wie FIG.9 jedoch einen Lenkeinschlag des Vorderrades 22 im Uhrzeigersinn, also einen Lenkeinschlag des Fahrrades nach rechts.
Neigt der Fahrradfahrer den Fahrradrahmen 7 in etwa quer zur Fahrtrichtung nach links, dann schwenkt der Achsschenkel 37 und somit das Vorderrad 22, gegen den Uhrzeigersinn um die Lenkachse 37.4 und das Fahrrad lenkt nach links.Neigt der Fahrradfahrer den Fahrradrahmen 7 in etwa quer zur Fahrtrichtung nach rechts, dann schwenkt der Achsschenkel 37 und somit das Vorderrad 22, mit dem Uhrzeigersinn um die Lenkachse 37.4 und das Fahrrad lenkt nach rechts. Während des Neigens hält der Fahrradfahrer die Handkurbelgriffe 6.5 mit seinen Händen fest. Wie in der Variante A1 beschrieben, neigt der Fahrradfahrer das Fahrrad, indem er mit seinen Armen die Handkurbelgriffe 6.5 und somit den Fahrradrahmen 7, in etwa quer zur Fahrtrichtung, auf eine Seite (nach links oder rechts) gegen die Aufstandsfläche B neigt. Durch dieses Neigen lenkt er das Fahrrad. Während dieses Neigens beziehungsweise Lenkens kann der Fahrradfahrer das Fahrrad mit seinen Armen antreiben, da er die Handkurbeigriffe 6.5 mit seinen Händen festhält.

Da der Antrieb des Fahrrades, dem Antrieb der Varianten A1 und A3 entspricht, ist auch in Variante A4 die Lenkung vom Antrieb entkoppelt. Durch die Lagerung der Handkurbeln 6 im Fahrradrahmen 7 werden die Kräfte, die beim Antrieb auf die Handkurbeln 6 wirken, vom Fahrradrahmen 7 aufgenommen und über den Synchronriemen 11 und die Antriebskette 4 auf das Hinterrad 17 übertragen.

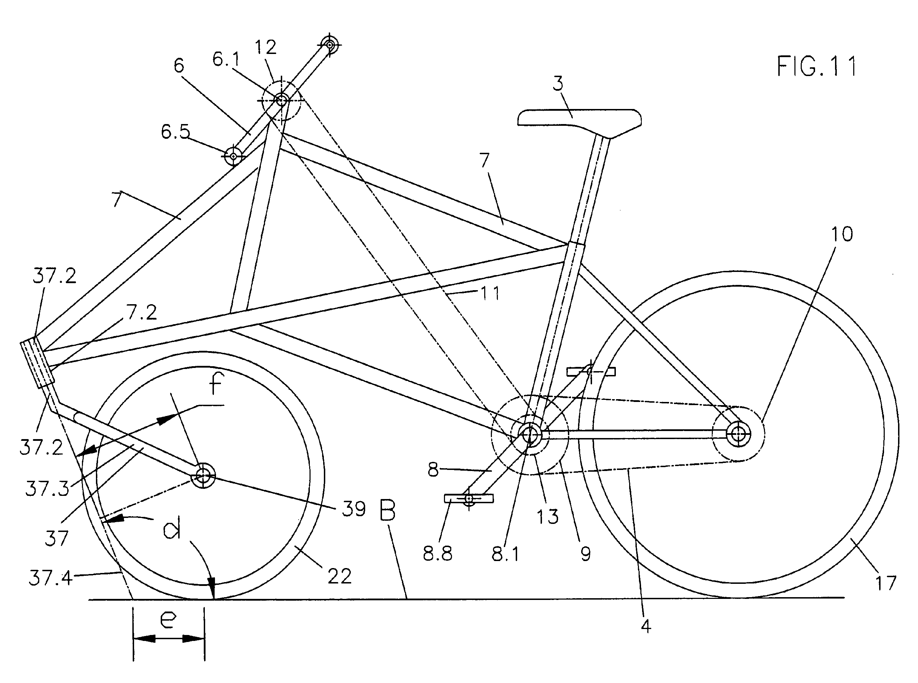

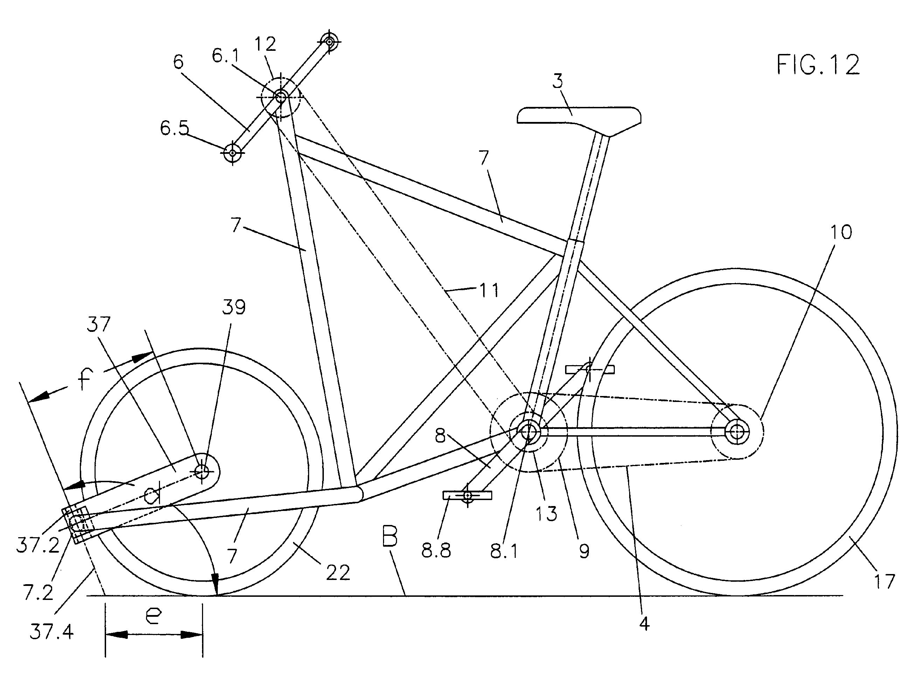

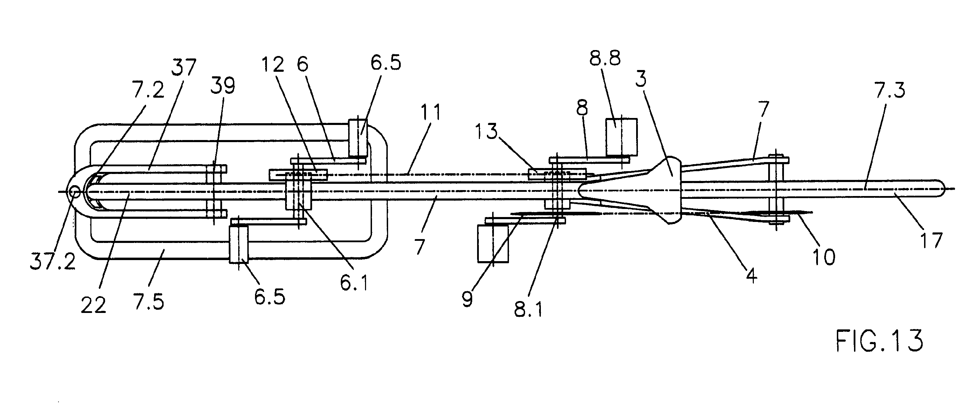

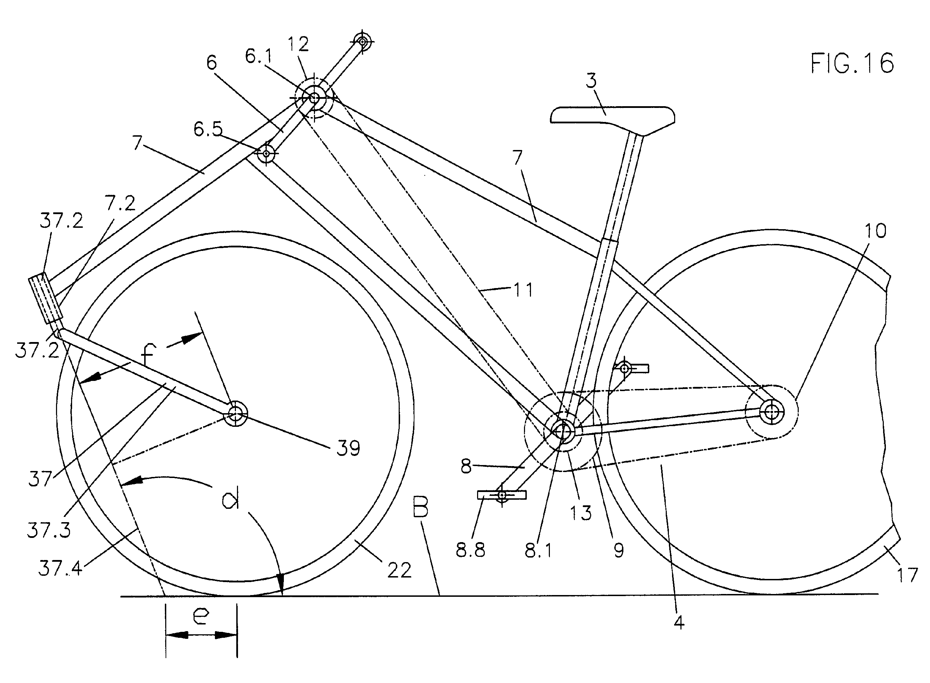

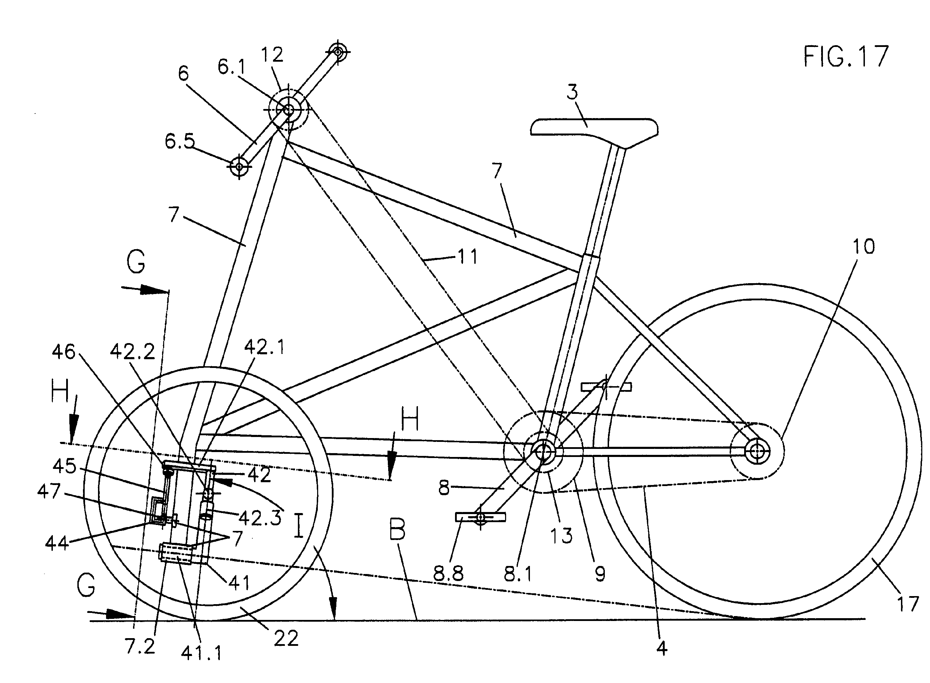

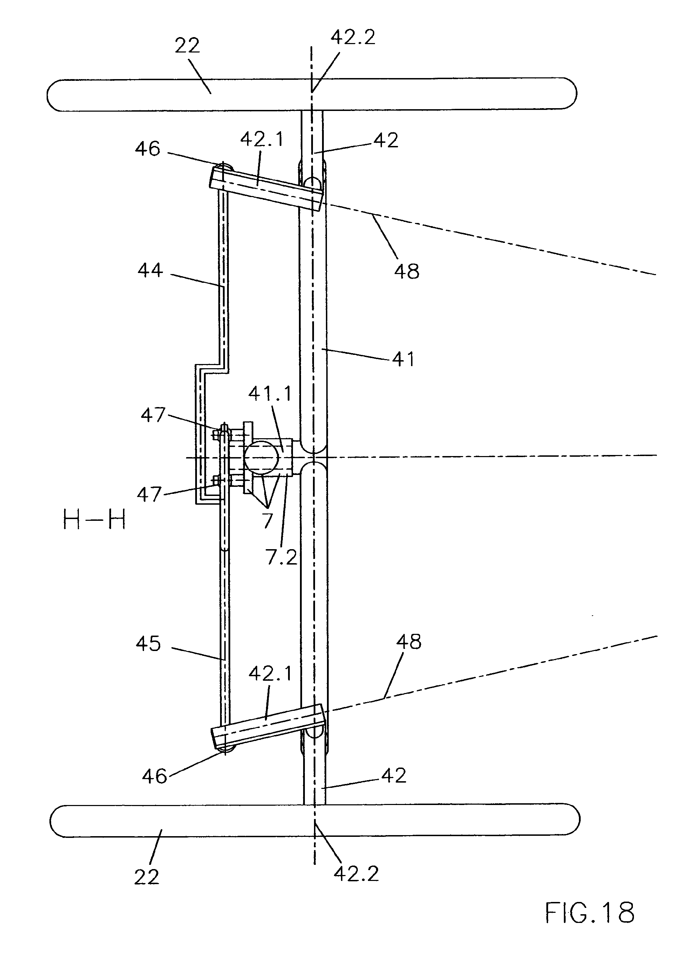

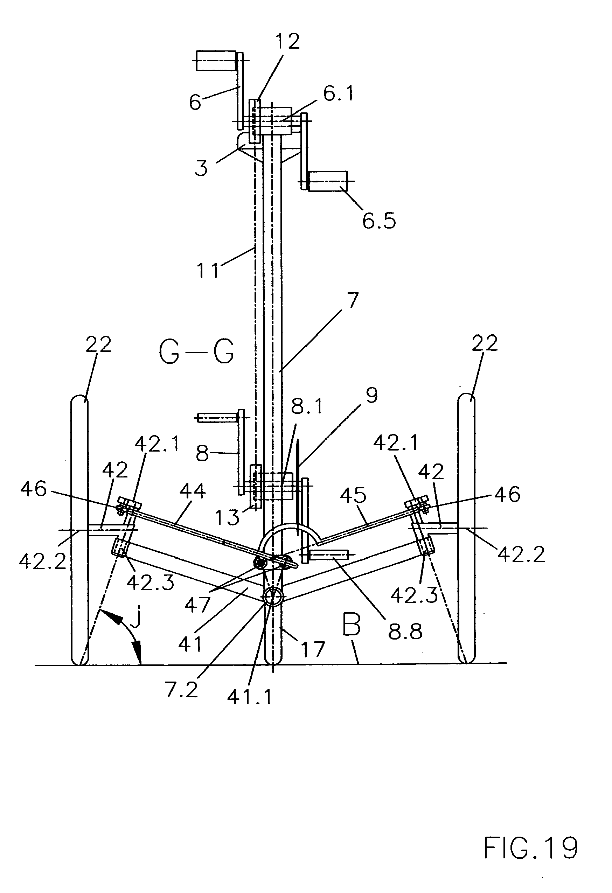

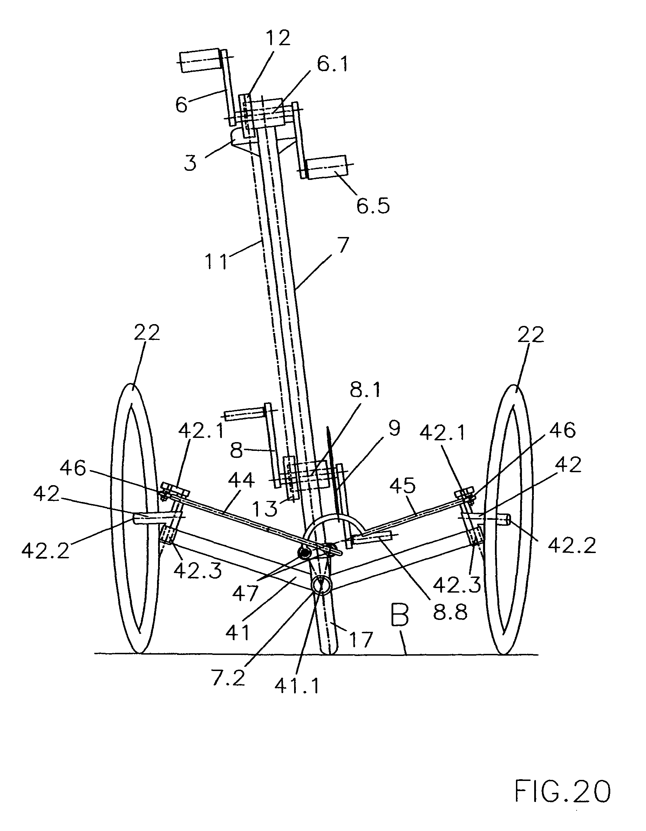

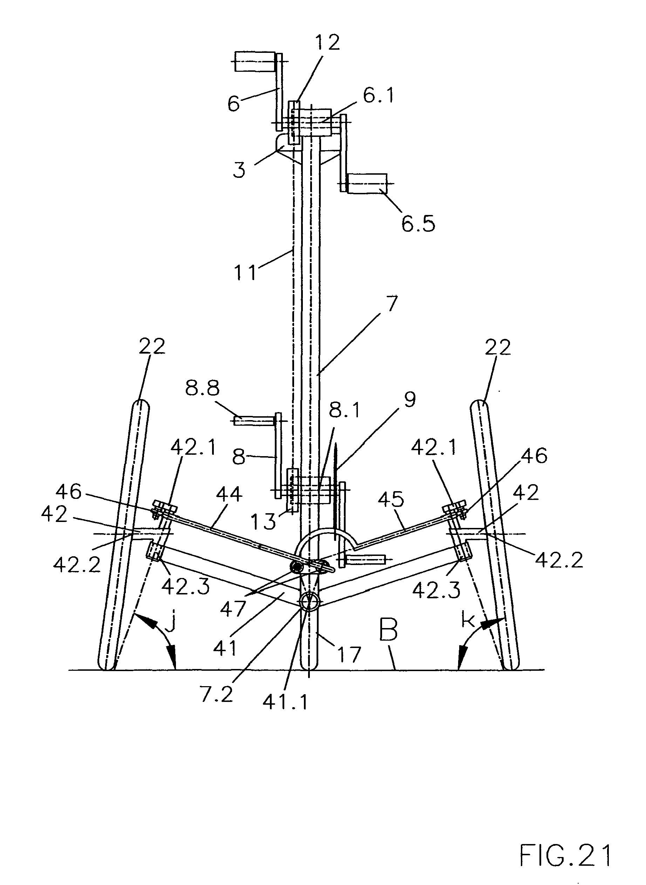

Die erfindungsgemäße Variante A5 entspricht der Variante A4. Auch in dieser Variante befindet sich die Lenkachse 37.4 vor der Achse 39 des Vorderrades 22, steht in einem Winkel d zur Aufstandsfläche B, hat einen Nachlauf e und die Achse 39 hat einen Rücksprung f zur Lenkachse 37.4. Allerdings befindet sich die Lagerung des Achsschenkels 37, entlang der Lenkachse 37.4, weiter oberhalb. Die Lagerung des Achsschenkels 37 befindet sich, um das Maß n, vertikal oberhalb der Achse 39 des Vorderrades 22 (FIG.11). Der Achsschenkel 37 hat eine ähnliche Form, wie die einer Fahrradgabel eines gewöhnlichen Fahrrades. Der Achsschenkel 37 besitzt zwei Achsschenkelrohre 37.3. Diese beiden Achsschenkelrohre 37.3 nehmen die Achse 39 des Vorderrades 22 an ihren Enden auf und verlaufen je recht und links um das Vorderrad 22 und laufen dann in der Fahrradmittelachse 7.3 zusammen, wo die beiden Achsschenkelrohre 37.3 mit der Achse 37.2 fest verbunden sind. In Variante A5 besteht die Lagerung des Achsschenkels 37 aus dem das Lenkkopflagerrohr 7.2, dem Lenkkopflager und der Achse 37.2. Die Achse 37.2 ist fest mit die beiden Achsschenkelrohren 37.3 und somit mit dem Achsschenkel 37 verbunden und ist über das Lenkkopflager in dem Lenkkopflagerrohr 7.2 gelagert, welches fest mit dem Fahrradrahmen 7 verbunden ist. In Variante A5 ist die Lenkachse 37.4 die gemeinsame Achse des Lenkkopflagers, des Lenkkopflagerrohrs 7.2 und der Achse 37.2.
Die Variante A4 hat den Nachteil dass, bei gleich bleibendem Winkel d, der Vorderraddurchmesser nicht vergrößert werden kann, ohne dabei den Nachlauf e oder der Rücksprung f zu vergrößern.
Die Variante A5 erlaubt hingegen einen bedeutend größeren Vorderraddurchmesser, bei gleichbleibendem Winkel d, Nachlauf e und Rücksprung f. In der Variante A5 ist sogar ein größerer Vorderraddurchmesser bei gleichbleibendem Winkel d und kleinerem Nachlauf e und kleinerem Rücksprung f möglich. Ein größerer Vorderraddurchmesser ist insbesondere von Vorteil, da sich mit einem größeren Vorderrad 22 die Fahreigenschaften des Fahrrades verbessern. Mit den größeren Laufrädern 17,22 vergrößert sich deren Kreiselwirkung und diese tragen zur Aufrechterhaltung des Gleichgewichts beim Fahrradfahren bei. Insbesondere bei mittleren Geschwindigkeiten bewirken die Kreiselwirkung eine Eigenstabilisierung des Fahrrades. Dadurch wird das Fahrrad laufruhiger und es neigt weniger dazu zur Seite wegzukippen. Somit muss der Fahrradfahrer weniger durch ausgleichende Bewegungen eingreifen, um das Fahrrad bei der Geradeausfahrt senkrecht zu halten und vor dem Umkippen zu bewahren.
Dies ermöglicht auch eine vorteilhafte Ausführung der Variante A5. In dieser Ausführung besitzt das erfindungsgemäße Fahrrad der Variante A5 ein größeres Vorderrad 22 (FIG.16). Das Vorderrad 22 hat einen Durchmesser von 29 Zoll, das sind etwa 740 mm.
Im Allgemeinen ist für die Variante A5 ein Vorderrad 22 besonders vorteilhaft, das einen Durchmesser größer 600 mm besitzt. Noch laufruhiger sind Ausführungen der Variante A5 mit Vorderraddurchmessern größer 700 mm.

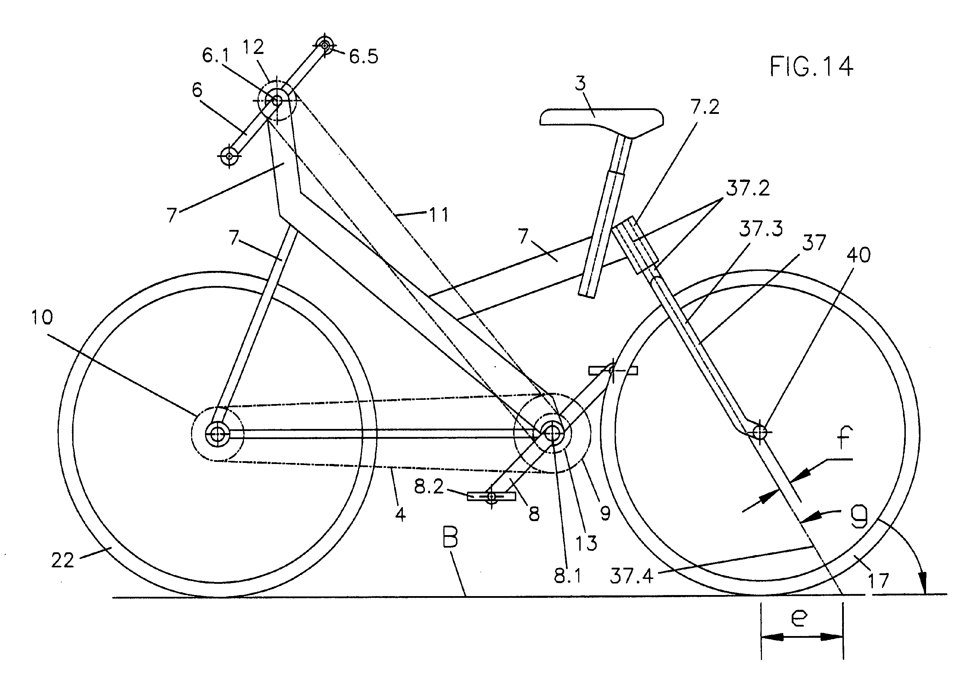

Die erfindungsgemäße Variante A7 entspricht der Variante A5. Allerdings lenkt hier das Hinterrad 17. Das Hinterrad 17 ist über die Hinterradachse 40 drehbar in den Achsschenkelrohren 37.3 des Achsschenkels 37 gelagert (FIG.14). Der Achsschenkel 37 hat eine ähnliche Form, wie die einer Fahrradgabel eines gewöhnlichen Fahrrades. Das heißt, die beiden Achsschenkelrohre 37.3 nehmen die Achse 40 des Hinterrades 17 an ihren Enden auf und verlaufen je rechts und links um das Hinterrad 17 und laufen dann in der Fahrradmittelachse 7.3 zusammen, wo die beiden Achsschenkelrohre 37.3 mit der Achse 37.2 fest verbunden sind. In Variante A7 besteht die Lagerung des Achsschenkels 37 aus dem das Lenkkopflagerrohr 7.2, dem Lenkkopflager und der Achse 37.2. Die Achse 37.2 ist fest mit die beiden Achsschenkelrohren 37.3 und somit mit dem Achsschenkel 37 verbunden und ist über das Lenkkopflager in dem Lenkkopflagerrohr 7.2 gelagert, welches fest mit dem Fahrradrahmen 7 verbunden ist. In Variante A7 ist die Lenkachse 37.4 die gemeinsame Achse des Lenkkopflagers, des Lenkkopflagerrohrs 7.2 und der Achse 37.2. Die Lenkachse 37.4 befindet sich vor der Achse 40 des Hinterrades 17 und steht in einem Winkel g zur Aufstandsfläche B (FIG.14). Der Winkel g beträgt zwischen 95° und 150°, vorzugsweise zwischen 105° und 125°. Durch den Nachlauf e lenkt das Hinterrad 17, bei einem Kippen des Fahrrades nach links, ebenso nach links. Das Hinterrad 17 läuft dem Spurpunkt nach, deshalb der Name "Nachlauf". Außerdem bewirkt die Neigung g der Lenkachse 37.4 in Verbindung mit dem Rücksprung f der Achse 40 zur Lenkachse 37.4, dass bei Geradeausfahrt des Fahrrades die Gewichtskraft des Fahrrades und des Fahrradfahrers das Hinterrad 17 in Geradeausstellung halten und das Fahrrad so spurstabil machen.

Neigt der Fahrradfahrer den Fahrradrahmen 7 quer zur Fahrtrichtung nach links, dann schwenkt der Achsschenkel 37 und somit das Hinterrad 17, im Uhrzeigersinn um die Lenkachse 37.4 und das Fahrrad lenkt nach links. Neigt der Fahrradfahrer den Fahrradrahmen 7 quer zur Fahrtrichtung nach rechts, dann schwenkt der Achsschenkel 37 und somit das Hinterrad 17, gegen den Uhrzeigersinn um die Lenkachse 37.4 und das Fahrrad lenkt nach rechts.

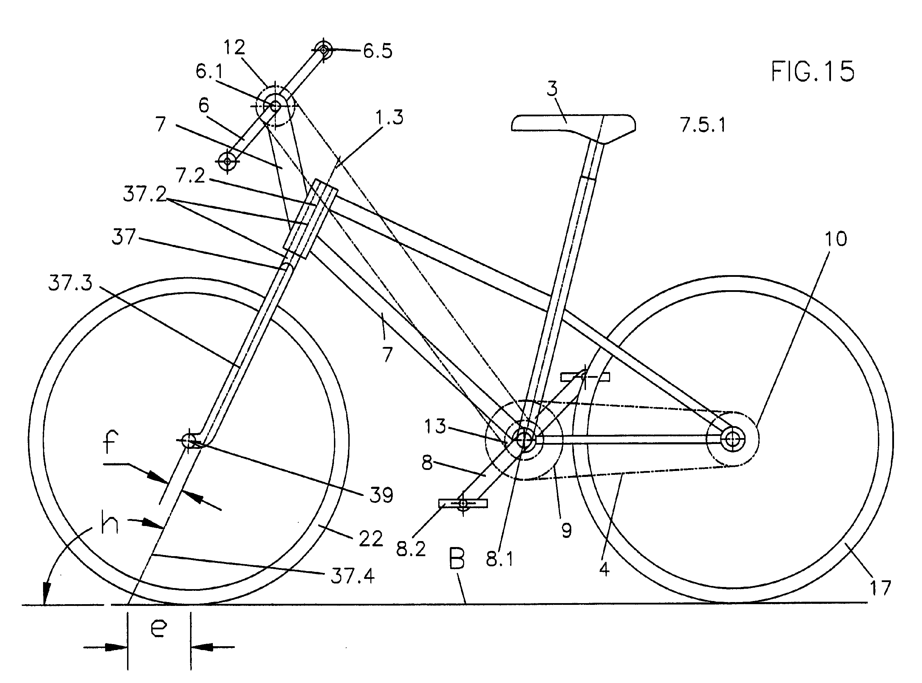

Die erfindungsgemäße Variante A8 entspricht der Variante A7. Allerdings lenkt in der Variante A8 das Vorderrad 22 und die Lenkung des Fahrrades entspricht der Vorderradgabel und dem Lenkkopflager eines herkömmlichen Fahrrades. Jedoch ist in Variante A8 die Vorderradgabel nicht mit einem Lenker verbunden, wie das bei herkömmlichen Fahrrädern üblich ist. Stattdessen lenkt der Fahrradfahrer, wie in Variante A7, durch ein Neigen des Fahrradrahmens. Der Achsschenkel 37 hat die gleiche Form, wie die einer Fahrradgabel eines gewöhnlichen Fahrrades. Das heißt, die beiden Achsschenkelrohre 37.3 nehmen die Achse 39 des Vorderrades 22 an ihren Enden auf und verlaufen je recht und links um das Vorderrad 22 und laufen dann in der Fahrradmittelachse 7.3 zusammen, wo die beiden Achsschenkelrohre 37.3 mit der Achse 37.2 fest verbunden sind. In Variante A8 besteht die Lagerung des Achsschenkels 37 aus dem das Lenkkopflagerrohr 7.2, dem Lenkkopflager und der Achse 37.2. Die Achse 37.2 ist fest mit die beiden Achsschenkelrohren 37.3 und somit mit dem Achsschenkel 37 verbunden und ist über das Lenkkopflager in dem Lenkkopflagerrohr 7.2 gelagert, welches fest mit dem Fahrradrahmen 7 verbunden ist. In Variante A8 ist die Lenkachse 37.4 die gemeinsame Achse des Lenkkopflagers, des Lenkkopflagerrohrs 7.2 und der Achse 37.2. Die Lenkachse 37.4 befindet sich hinter der Achse 39 des Vorderrades 22 und steht in einem Winkel h zur Aufstandsfläche B (FIG.15). Der Winkel h beträgt zwischen 95° und 150°, vorzugsweise zwischen 105° und 125°.

Die Neigung h der Lenkachse 37.4 bewirkt, in Verbindung mit dem sogenannten Rücksprung f der Achse 39 des Vorderrades 22 zur Lenkachse 37.4, dass bei Geradeausfahrt des Fahrrades die Gewichtskraft des Fahrrades und des Fahrradfahrers das Vorderrad 22 in Geradeausstellung halten und das Fahrrad so spurstabil machen. Neigt der Fahrradfahrer den Fahrradrahmen 7 in etwa quer zur Fahrtrichtung nach links, dann schwenkt der Achsschenkel 37 und somit das Vorderrad 22, gegen den Uhrzeigersinn um die Lenkachse 37.4 und das Fahrrad lenkt nach links.

Neigt der Fahrradfahrer den Fahrradrahmen 7 in etwa quer zur Fahrtrichtung nach rechts, dann schwenkt der Achsschenkel 37 und somit das Vorderrad 22, mit dem Uhrzeigersinn um die Lenkachse 37.4 und das Fahrrad lenkt nach rechts.

Die erfindungsgemäße Variante A9 entspricht den Varianten A3 bis A8 und der Variante B1. Allerdings verfügt das Fahrrad nicht über die Antriebskomponenten, wie in den Variante A3 bis A8 und der Variante B1, also über unter anderem Handkurbeln 6 und Tretkurbeln 8, sondern es verfügt über die Antriebskomponenten wie in Variante A2, also über unter anderem Armhebel 6.2 und 6.3 und über Trittbretter 8.2 und 8.3. Somit wird das Fahrrad nicht wie in den Varianten A3 bis A8 und der Variante B1 über Handkurbeln 6 und Tretkurbeln 8 angetrieben, sondern es wird wie in Variante A2 angetrieben, also über Armhebel 6.2 und 6.3 und über Trittbretter 8.2 und 8.3.

Die erfindungsgemäße Variante C1 ist für querschnittsgelähmte Fahrradfahrer, oder Fahrradfahrer ohne Beine, gedacht. Die Variante C1 entspricht der Varianten A1, A3 bis A8 und der Variante B1. Allerdings hat die Variante C1 keinen Beinantrieb, sondern nur den Armantrieb über die Handkurbeln 6 (ohne Abbildung). Im Gegensatz zu den anderen Varianten besitzt das Fahrrad keine Tretkurbeln 8 und keine Pedale 8.8. Weiterhin hat der Sattel nicht die Form eines normalen Fahrradsattels, sondern er hat eine breite Auflage für die ganze Breite des Gesäßes des Fahrradfahrers. Über die breite Auflagefläche kann der Fahrradfahrer das Moment, zum Neigen des Fahrrades während des Lenkens, besser auf das Fahrrad ausüben. Das Fahrrad besitzt Beinauflagen die am Fahrradrahmen befestigt sind. In diese kann der querschnittgelähmte Fahrradfahrer seine Beine während der Fahrt ablegen.

Als Alternative für alle Varianten verfügt das Fahrrad zusätzlich über einen elektrischen Hilfsmotor. Solche Hilfsmotoren sind bekannt. Sie befinden sich üblicherweise in der Antriebsnabe des Hinterrades 17. Alternativ befindet sich der Motor, samt dem dazugehörigen Akku, im Sitzrohr des Fahrrades. Dann verbinden Zahnräder den Motor mit der Welle der Tretkurbeln 8. Über diese Zahnräder überträgt der Motor sein Drehmoment an die Tretkurbeln 8. Der Motor kann parallel zum manuellen Antrieb durch den Fahrradfahrer zugeschaltet werden. Mit Hilfe des Motors kann der Fahrradfahrer noch große Steigungen überwinden und beschleunigen, selbst wenn ihm nach einer langen Tour schon die Kraft in seinen Armen und Beinen ausgegangen ist.

Die Beschreibung ist auch Bestandteil des erfinderischen Gedankens.

### Nummerierung entsprechend den Zeichnungen:

- 1: Gabel
- 1.7: Vorbau
- 2: Achsschenkel
- 2.1: Lenkachse
- 2.2: Achse
- 2.3: Spiralfeder
- 2.4: Stellschraube
- 2.5: Kulisse
- 3: Sattel
- 4: Antriebskette
- 5: Armkurbel
- 5.1: Achse
- 5.2: Handkurbelgriff
- 6: Handkurbel
- 6.1: Achse
- 6.2: Armhebel
- 6.3: Armhebel
- 6.4: Handgriff
- 6.5: Handkurbelgriff
- 6.8: Achse
- 7: Fahrradrahmen
- 7.2: Lenkkopflagerrohr
- 7.3: Fahrradmittelachse
- 7.4: Lenkachse
- 7.5: Rahmenstück
- 8: Tretkurbel
- 8.1: Achse
- 8.2: Trittbrett
- 8.3: Trittbrett
- 8.4: Achse
- 8.5: Achse
- 8.6: Achse
- 8.7: Achse
- 8.8: Pedal
- 9: Antriebskettenrad
- 10: Antriebsritzel
- 11: Synchronriemen
- 12: Synchronscheibe
- 13: Synchronscheibe
- 17: Hinterrad
- 22: Vorderrad
- 23: Schalt- und Bremshebel
- 30: Achse
- 31: Parallelogrammlenkung
- 32: Achskörper
- 33: Spurstange
- 34: Achsschenkel
- 35: Achse
- 36: Bolzen
- 37: Achsschenkel
- 37.1: Lenkkopflagerrohr
- 37.2: Achse
- 37.3: Achsschenkelrohre
- 37.4: Lenkachse
- 39: Achse
- 40: Achse
- 41: Achskörper
- 41.1: Lenkachse
- 42: Achsschenkel
- 42.1: Lenkhebel
- 42.2: Achse
- 42.3: Lenkachse
- 44: Spurstange
- 45: Spurstange
- 46: Kugelgelenk
- 47: Kugelgelenk
- 48: Lenkkopflagerachse
- 49: Fahrradfahrer
- 50: Antriebskette

## Patentansprüche

1. Fahrrad mit zwei Rädern, mit einer Lenkung die wenigstens eine Lenkachse (37.4) besitzt, die sich hinter der Achse (39) des Vorderrades (22) befindet, mit Armantrieb, insbesondere zum Durchführen des Verfahrens nach einem der Ansprüche 9 bis 15, **dadurch gekennzeichnet, dass** die Lenkung wenigstens einen Achsschenkel (37) und einen Fahrradrahmen (7) besitzt und der wenigstens eine Achsschenkel (37) um die wenigstens eine Lenkachse (37.4), drehbar oder schwenkbar zum Fahrradrahmen (7) gelagert ist.

2. Fahrrad nach Anspruch 1, **dadurch gekennzeichnet, dass** der Armantrieb wenigstens eine Handkurbel (6) oder zwei Armhebel (6.2,6.3) besitzt, welche drehbar oder schwenkbar im Fahrradrahmen (7), oder in einem am Fahrradrahmen befestigten Teil, gelagert sind.

3. Fahrrad nach Anspruch 1 oder 2, **dadurch gekennzeichnet, dass** das Fahrrad einen Beinantrieb, insbesondere mit mindestens einer Tretkurbel (8), besitzt.

4. Fahrrad nach einem der Ansprüche 1 bis 3, **dadurch gekennzeichnet, dass** die Lenkachse (37.4) von der Aufstandsfläche B des Fahrrades ausgehend, in einen Winkel von 30° bis 85°, zur Aufstandsfläche B des Fahrrades geneigt ist.

5. Fahrrad nach einem der Ansprüche 1 bis 4, **dadurch gekennzeichnet, dass** eine Achse (39) des Vorderrades (22) einen Rücksprung f von 0 bis 400 mm, vorzugsweise von 50 bis 200 mm, zur Lenkachse (37.4) besitzt.

6. Fahrrad nach einem der Ansprüche 1 bis 5, **dadurch gekennzeichnet, dass** die Lenkung keinen zum Fahrradrahmen (7) schwenkbar gelagerten Lenker besitzt.

7. Fahrrad nach einem der Ansprüche 1 bis 6, **dadurch gekennzeichnet, dass** das Vorderrad (22) oder das Hinterrad (17) in dem wenigstens einen Achsschenkel (37) gelagert ist.

8. Fahrrad nach einem der Ansprüche 1 bis 7, **dadurch gekennzeichnet, dass** das Fahrrad einen Hilfsmotor besitzt.

9. Verfahren zum Fahren eines Fahrrades mit zwei Rädern, mit einer Lenkung die wenigstens eine Lenkachse (37.4) besitzt, die sich hinter der Achse (39) des Vorderrades (22) befindet, mit wenigstens einem Armantrieb, insbesondere zum Fahren des Fahrrades nach einem der Ansprüche 1 bis 8, **dadurch gekennzeichnet, dass** der Fahrradfahrer (49) das Fahrrad lenkt, indem er den Fahrradrahmen (7), gegen die Aufstandsfläche B neigt.

10. Verfahren nach Anspruch 9, **dadurch gekennzeichnet, dass** das Fahrrad keine zum Fahrradrahmen 7 schwenkbar gelagerten Betätigungselemente besitzt, mit denen der Fahrradfahrer (49) direkt eine Kraft auf den Achsschenkel (37) ausübt, bei der diese Kraft die größte Kraft ist, die eine Lenkbewegung erzeugt.

11. Verfahren nach einem der Ansprüche 9 bis 10, **dadurch gekennzeichnet, dass** der Fahrradfahrer das Fahrrad mit seinen Beinen, insbesondere mit Beinkurbelbewegungen, antreibt.

12. Verfahren nach einem der Ansprüche 9 bis 11, **dadurch gekennzeichnet, dass** sich bei der Lenkbewegung wenigstens ein Achsschenkel (37) um wenigstens eine Lenkachse (37.4) schwenkt.

13. Verfahren nach einem der Ansprüche 9 bis 12, **dadurch gekennzeichnet, dass** die Neigung g oder h, das lenkende Rad (17,22) in Geradeausstellung hält.

14. Verfahren nach einem der Ansprüche 9 bis 13, **dadurch gekennzeichnet, dass** der Fahrradfahrer (49) über das Vorderrad (22) oder über das Hinterrad (17) lenkt.

15. Verfahren nach einem der Ansprüche 9 bis 14, **dadurch gekennzeichnet, dass** der Fahrradfahrer (49) das Fahrrad mit Armkurbelbewegungen antreibt.
